# EUROPEAN PATENT SPECIFICATION

(11) **EP 3 698 547 B1**
(45) Date of publication and mention of the grant of the patent: **26.03.2025**
(21) Application number: 18797174.2
(22) Date of filing: 02.10.2018
(51) Int. Cl.: H04N 19/597

(54) **POINT CLOUD DECODER AND METHOD FOR DECODING POINT CLOUD**
PUNKTWOLKEN-DECODIERER UND VERFAHREN ZUM DECODIEREN EINER PUNKTWOLKE
DÉCODEUR DE NUAGE DE POINTS, ET PROCÉDÉ DE DÉCODAGE DE NUAGE DE POINTS

(30) Priority: 16.10.2017 US 201762572880 P; 09.03.2018 US 201815916497
(43) Date of publication of application: 26.08.2020
(73) Proprietor: Mitsubishi Electric Corporation, Chiyoda-ku Tokyo 100-8310 (JP)
(72) Inventor: COHEN, Robert, Cambridge, Massachusetts 02139 (US); TIAN, Dong, Cambridge, Massachusetts 02139 (US); OCHIMIZU, Hideaki, Cambridge, Massachusetts 02139 (US); VETRO, Anthony, Cambridge, Massachusetts 02139 (US)
(74) Representative: Pfenning, Meinig & Partner mbB
(86) International application number: PCT/JP2018/037496
(87) International publication number: WO 2019/078047

(56) References cited:
- ROBERT COHEN ET AL: "Point-based prediction for point cloud compression", 120. MPEG MEETING; 23-10-2017 - 27-10-2017; MACAU; (MOTION PICTURE EXPERT GROUP OR ISO/IEC JTC1/SC29/WG11),, no. m41764, 19 October 2017 (2017-10-19), XP030070106
- MEKURIA RUFAEL ET AL: "Design, Implementation, and Evaluation of a Point Cloud Codec for Tele-Immersive Video", IEEE TRANSACTIONS ON CIRCUITS AND SYSTEMS FOR VIDEO TECHNOLOGY, INSTITUTE OF ELECTRICAL AND ELECTRONICS ENGINEERS, US, vol. 27, no. 4, 1 April 2017 (2017-04-01), pages 828 - 842, XP011644783, ISSN: 1051-8215, [retrieved on 20170403], DOI: 10.1109/TCSVT.2016.2543039
- AINALA KHARTIK ET AL: "An improved enhancement layer for octree based point cloud compression with plane projection approximation", PROCEEDINGS OF SPIE; [PROCEEDINGS OF SPIE ISSN 0277-786X VOLUME 10524], SPIE, US, vol. 9971, 27 September 2016 (2016-09-27), pages 99710R - 99710R, XP060078033, ISBN: 978-1-5106-1533-5, DOI: 10.1117/12.2237753
- COHEN ROBERT A ET AL: "Representation and coding of large-scale 3D dynamic maps", PROCEEDINGS OF SPIE; [PROCEEDINGS OF SPIE ISSN 0277-786X VOLUME 10524], SPIE, US, vol. 9971, 27 September 2016 (2016-09-27), pages 99710T - 99710T, XP060078035, ISBN: 978-1-5106-1533-5, DOI: 10.1117/12.2237755
- DE QUEIROZ RICARDO L ET AL: "Motion-Compensated Compression of Dynamic Voxelized Point Clouds", IEEE TRANSACTIONS ON IMAGE PROCESSING, IEEE SERVICE CENTER, PISCATAWAY, NJ, US, vol. 26, no. 8, 1 August 2017 (2017-08-01), pages 3886 - 3895, XP011653025, ISSN: 1057-7149, [retrieved on 20170613], DOI: 10.1109/TIP.2017.2707807
- BIRENDRA KATHARIYA (UMKC) ET AL: "Dynamic Geometry Compression with Binary Tree Based Prediction and Residual Coding", 118. MPEG MEETING; 3-4-2017 - 7-4-2017; HOBART; (MOTION PICTURE EXPERT GROUP OR ISO/IEC JTC1/SC29/WG11),, no. m40607, 31 March 2017 (2017-03-31), XP030068952
- CHEN SIHENG ET AL: "Contour-enhanced resampling of 3D point clouds via graphs", 2017 IEEE INTERNATIONAL CONFERENCE ON ACOUSTICS, SPEECH AND SIGNAL PROCESSING (ICASSP), IEEE, 5 March 2017 (2017-03-05), pages 2941 - 2945, XP033258952, DOI: 10.1109/ICASSP.2017.7952695

## Description

### [Technical Field]

The present disclosure relates generally to methods, encoders and decoders representing point cloud signals, and more particularly, to compressing, representing and processing point clouds.

### [Background Art]

A point cloud is generally characterized by a set of points located in three-dimensional (3D) space. For each point in a point cloud, attributes such as color or other data can be associated with points. Given that the amount of data in a point cloud can become quite large, compression is needed in order to store the data to a storage medium such as a disk drive, or in order to transmit the data, such as signaling it to a bit-stream for streaming from a network-enabled server to a client device. While methods for compressing images are well-established, different methods are needed for compressing 3D point clouds, because unlike images which comprise a uniform grid of picture elements or pixels, the points in point clouds can be located anywhere in 3D space.

Cohen et al. in "Point-based prediction for point cloud compression", 120th MPEG meeting; 23-10-2017 - 27-10-2017, Macau, discloses a method for coding point clouds using prediction and coding of residual; Mekuria et al. in "Design, Implementation, and Evaluation of a Point Cloud Codec for Tele-Immersive Video", IEEE transactions on circuits and systems for video technology, vol. 27, no. 4, 1 April 2017 (2017-04-01), pages 828-842, discloses a point cloud coder for 3D immersive video using MPEG/AVC/HEVC like prediction coding scheme, block based; Khartik et al. in "An improved enhancement layer for octree based point cloud compression with plane projection approximation", proceedings of SPIE, vol. 9971, 27 September 2016 (2016-09-27), pages 99710R-99710R, discloses a method of point cloud compression based on projection, prediction and residual coding. There is however is a need for methods, encoders and decoders for compressing, representing and processing point clouds.

### [Summary of Invention]

The invention is set out in the appended claims.
Embodiments of the present disclosure relate methods, encoders and decoders representing point cloud signals, and more particularly, to compressing, representing and processing point clouds. A point cloud can be characterized by a set of points located in three-dimensional space, where attributes or other data can be associated with each point. Aspects of the present disclosure include compressing point clouds since the amount of data in a point cloud can be large, resulting in the need for compression, in order to either store the data to a storage medium, or in order to transmit the data, such as signaling the data to a bit-stream for streaming from a network-enabled server to a client device.

Regarding point prediction, some embodiments include signaling the coordinates of each point in a point cloud relative to a predetermined location, by computing the difference between the point position and the predetermined location and signaling it. This difference can be a prediction residual. The predetermined location can be the center of a block containing the points to be processed. The predetermined location can also be a previously-decoded point location, for example the first decoded point.

Some embodiments, which are useful for understanding but not part of the invention, include decoding a difference between a point position and a predetermined location, which can be a prediction residual.

Some embodiments, which are useful for understanding but not part of the invention, include signaling the coordinates of each point in a point cloud relative to a previously-decoded point. For example, given a point in a sequence of points, the difference between the location of the point and the location of the point that was processed or encoded or decoded immediately prior to the point in sequential order, can be computed. This difference can be a prediction residual.

Some embodiments, which is useful for understanding but not part of the invention, include decoding a difference between a point position of a point and the position of a previously-decoded point. This difference can be a prediction residual. The previously-decoded point can be the point that was decoded sequentially prior to the point.

Regarding point reordering and skipping, some embodiments include reordering a sequence of points such that the distance between subsequent points is minimized. Further other embodiments can include reordering a sequence of points such that the number of different distances between subsequent points is minimized.

Some embodiments include skipping the signaling of a point if it is collocated or within a threshold distance from a previously-signaled point. Additionally, if a given decoded point is collocated or within a threshold distance from a previously-signaled point, then the reconstruction of the point can be skipped. The signaling or reconstruction of points or decoded points outside a bounding box or minimum and maximum coordinate limits can also be skipped.

Regarding data-dependent partitioning, some embodiments include performing data-dependent non-uniform partitioning of a space, based on a scoring function that determines a location of the partitioning across at least one dimension of the space. Wherein, data-dependent non-uniform partitioning of the space can be based on measures or calculations from data representing the object, along with information about the current partitioning structure, such as a minimum or maximum block size, wherein a function, i.e. a scoring function, can specify how or where to split the current block or sub-block being processed.

Regarding organizing an unorganized point cloud, some embodiments include organizing an unorganized point cloud by mapping each point to positions in an organizational grid. The mapping process can be implemented with a scanning process, in which the points in the point cloud can be virtually scanned based on their position relative to the scan origin, and in an order based upon a scan direction or angle.

Regarding resampling and realigning a point cloud, some embodiments include using a scoring function to identify a subset of points in a point cloud, and subsequent processing of the point cloud is applied to the subset of points.

Some embodiments include resampling or aligning the points in a point cloud to a predetermined subset of locations such as a grid. The point locations can be signaled, or an index indicating to where the point was aligned can be signaled.

According to an embodiment of the present disclosure, which is useful for understanding but not part of the invention, a point cloud decoder including a processor to decode each block in a set of blocks from a point cloud, so as to obtain a decoded point cloud. Wherein each block includes a set of points, such that for each block the processor is to decode a set of prediction residuals from a compressed bitstream. Use a predetermined location in the block, and compute for each prediction residual in the set of prediction residuals, a position of a point by adding the prediction residual to the predetermined location, so as to obtain a set of decoded points for the block. Wherein the decoded points for the blocks in the set of blocks represent the decoded point cloud.

According to another embodiment of the present disclosure, which is useful for understanding but not part of the invention, a method for decoding a point cloud, including using a processor connected to a memory, to decode each block in a set of blocks from a point cloud, so as to obtain a decoded point cloud. Wherein each block includes a set of points, such that for each block the processor is for decoding a set of prediction residuals from a compressed bitstream. Using a predetermined location in the block, and computing for each prediction residual in the set of prediction residuals, a position of a point by adding the prediction residual to the predetermined location, so as to obtain a set of decoded points for the block. Wherein the decoded points for the blocks in the set of blocks represent the decoded point cloud.

According to another embodiment of the present disclosure, which is useful for understanding but not part of the invention, a point cloud decoder including a memory having data stored including previously decoded points. A processor to decode a sequence of points from a compressed bitstream, so as to obtain a decoded point cloud The processor is to decode a sequence of prediction residuals from the compressed bitstream. Compute for each prediction residual in the sequence of prediction residuals, a position of a point by adding the prediction residual to a position of a previously decoded point stored in the memory, so as to obtain a sequence of decoded points. Wherein the sequence of decoded points represents the decoded point cloud.

The presently disclosed embodiments will be further explained with reference to the attached drawings. The drawings shown are not necessarily to scale, with emphasis instead generally being placed upon illustrating the principles of the presently disclosed embodiments.

### [Brief Description of Drawings]

[Fig. 1A]

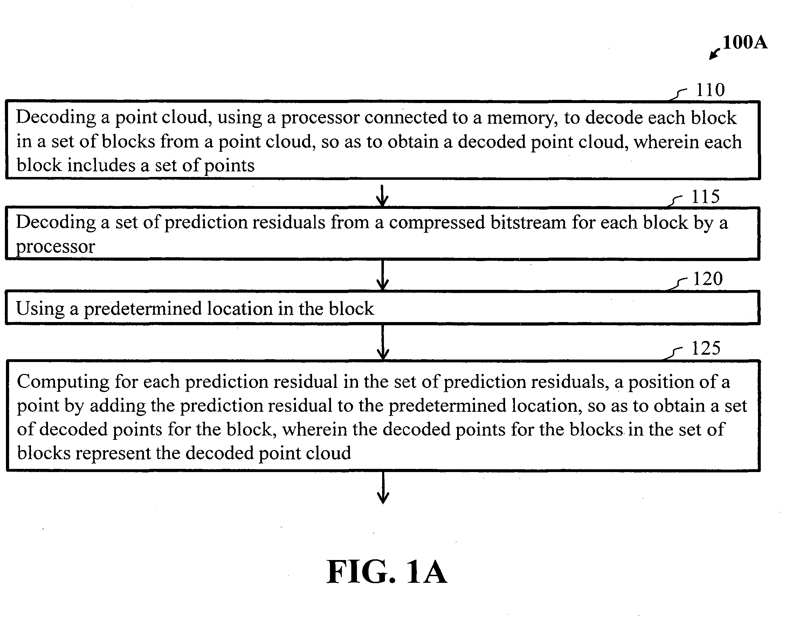

   FIG. 1A is a block diagram illustrating steps of a first point prediction method, according to embodiments of the present disclosure.
[Fig. 1B]

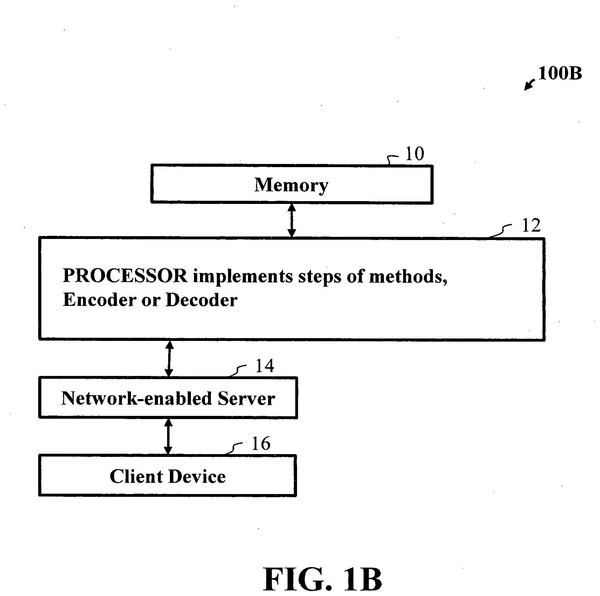

   FIG. 1B is a block diagram illustrating some components implementing methods of the present disclosure, according to embodiments of the present disclosure.
[Fig. 2A]

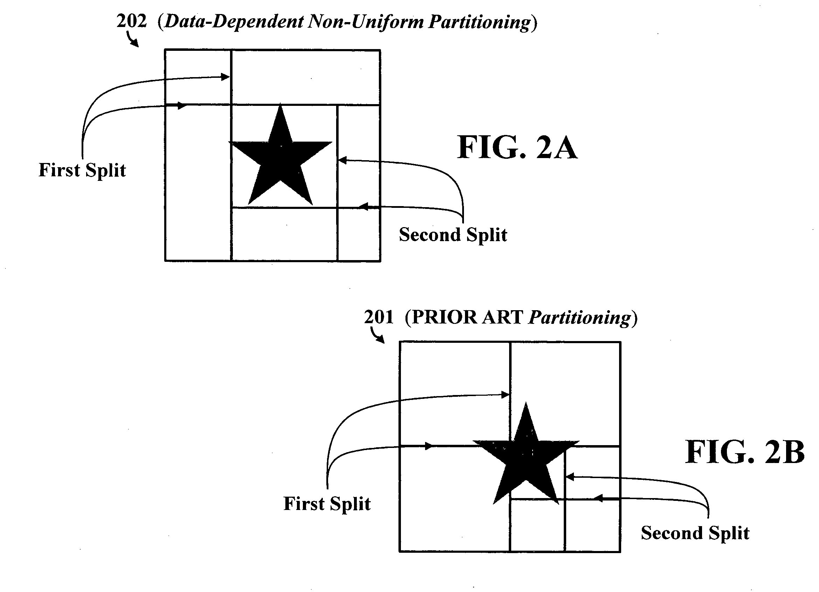

   FIG. 2A is a schematic illustrating a data-dependent non-uniform partitioning method, according to embodiments of the present disclosure.
[Fig. 2B]
   FIG. 2B is a schematic illustrating a PRIOR ART partitioning method.
[Fig. 3A]

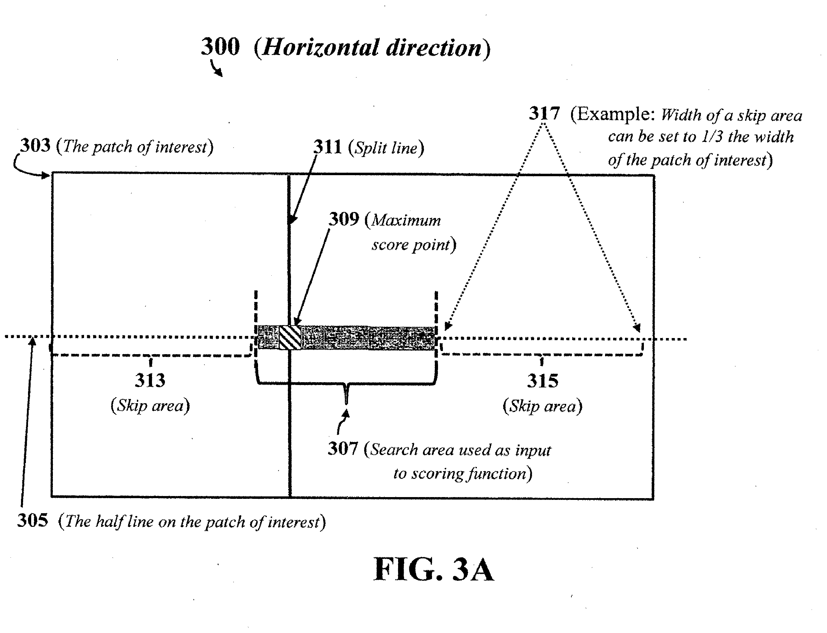

   FIG. 3A is a schematic illustrating a process for using data along a line to calculate where to perform the data-dependent non-uniform split, wherein given a block or patch of data, data along the vertical halfway split position is scanned horizontally by a sliding window of data points, which is used to determine where to split the current block horizontally, i.e. by a vertical line, e.g. into a left sub-block and a right sub-block for the case of partitioning a 2-D grid, according to embodiments of the present disclosure.
[Fig. 3B]

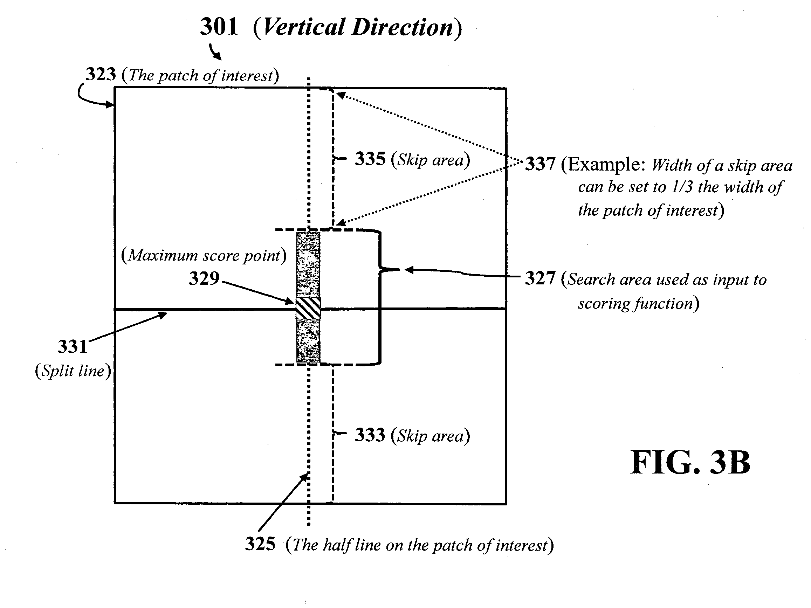

   FIG. 3B is a schematic illustrating a process for using data alone a line to calculate where to perform the data-dependent non-uniform split, wherein given a block or patch, data along the horizontal split position or along a line orthogonal to the vertical split position is scanned vertically by a sliding window of data points, which is used to determine where to split the current block vertically, i.e. by a horizontal line, e.g. into a lower sub-block and an upper sub-block for the case of partitioning a 2-D grid according to embodiments of the present disclosure.
[Fig. 4A]

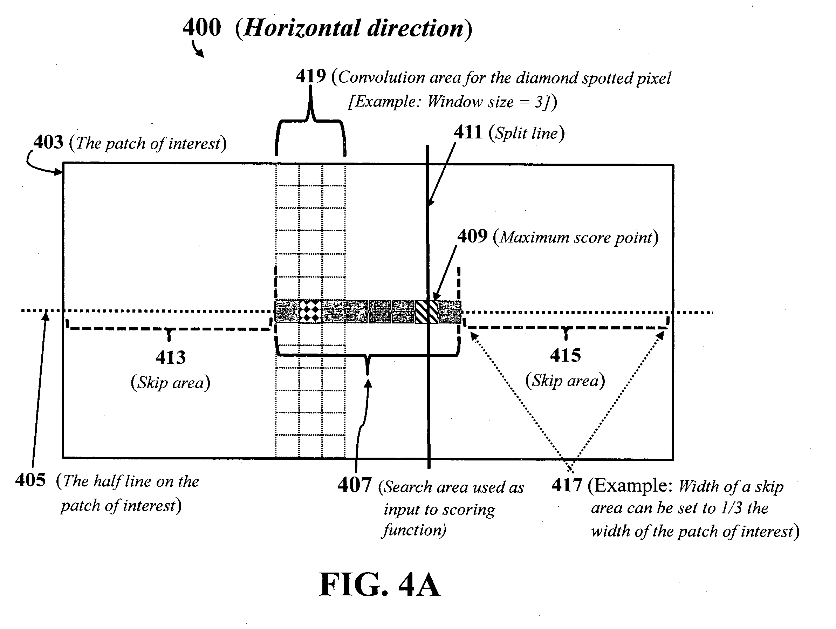

   FIG. 4A is a schematic illustrating a process for using a multidimensional sliding window of data points to calculate where to perform the data-dependent non-uniform split, wherein the data is a region oriented along a horizontal split position, e.g. a vertical rectangle, according to embodiments of the present disclosure.
[Fig. 4B]

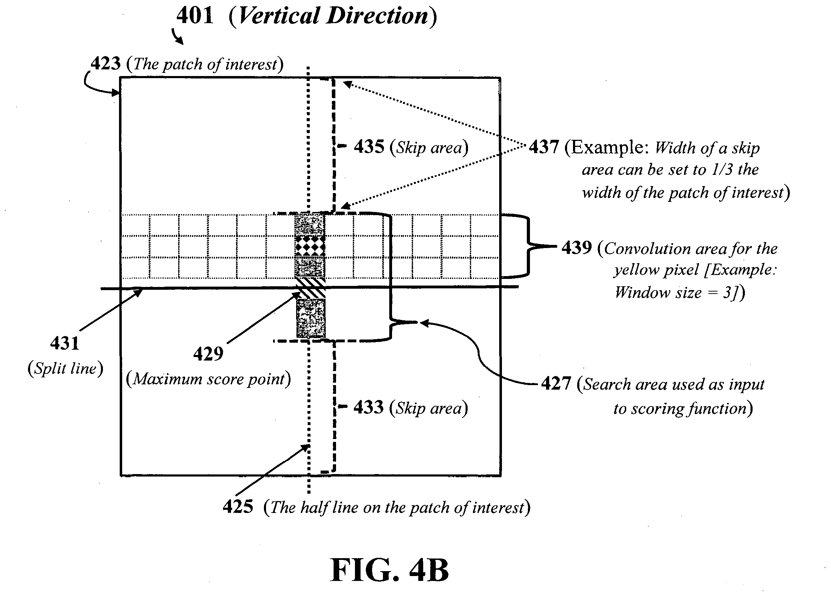

   FIG. 4B is a schematic illustrating a process for using a multidimensional sliding window of data points to calculate where to perform the data-dependent non-uniform split, wherein the data is a region oriented along a vertical split position, e.g. a horizontal rectangle, according to embodiments of the present disclosure.
[Fig. 5A]

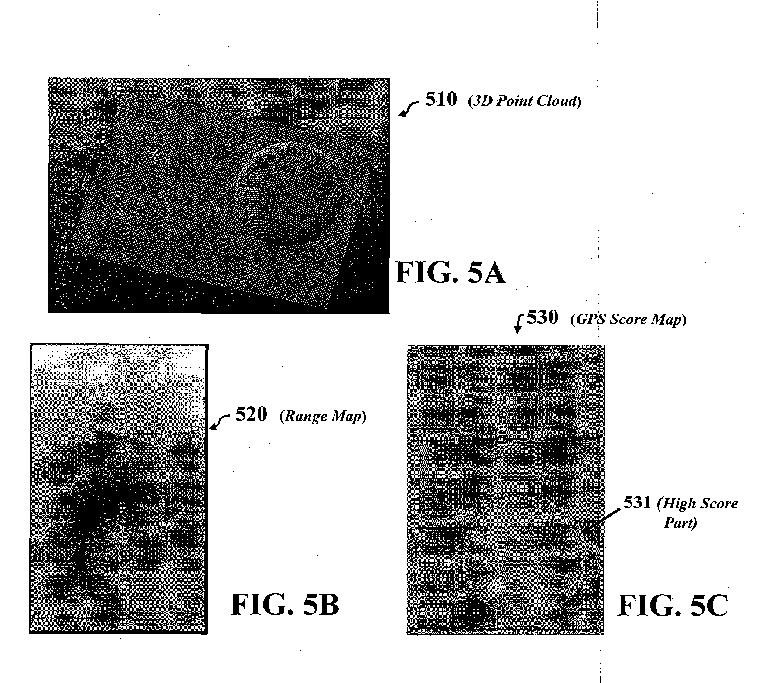

   FIG. 5A is a schematic illustrating a 3D point cloud, according to embodiments of the present disclosure.
[Fig. 5B]
   FIG. 5B is a schematic illustrating a range map or depth map which represents the distance of each point from a plane or the elevation or depth of each point is used as data input to the scoring function, according to embodiments of the present disclosure.
[Fig. 5C]
   FIG. 5C is a schematic illustrating the output of a scoring function applied to a point cloud or range map, in which higher score values are illustrated using lighter colors, according to embodiments of the present disclosure.
[Fig. 5D]

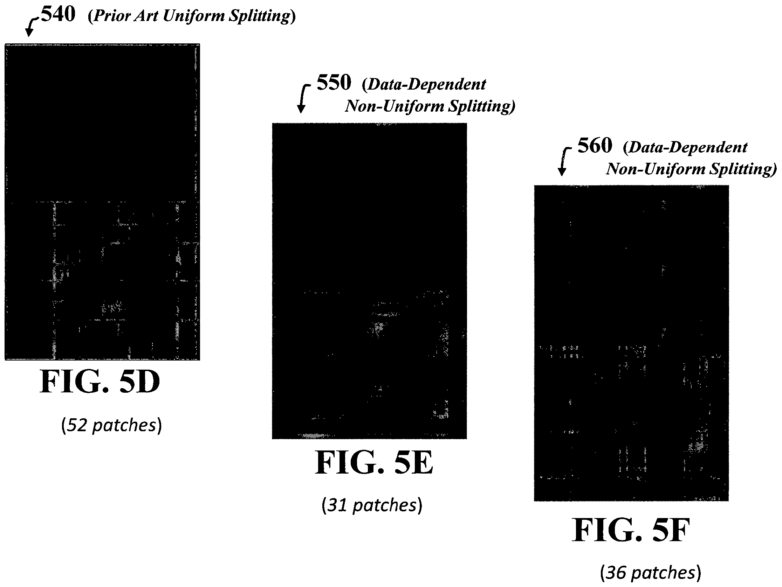

   FIG. 5D is a schematic illustrating an example of PRIOR ART uniform splitting.
[Fig. 5E]
   FIG. 5E is a schematic illustrating a method of data-dependent non-uniform splitting, according to embodiments of the present disclosure.
[Fig. 5F]
   FIG. 5F is a schematic illustrating a method of data-dependent non-uniform splitting, according to embodiments of the present disclosure.
[Fig. 6]

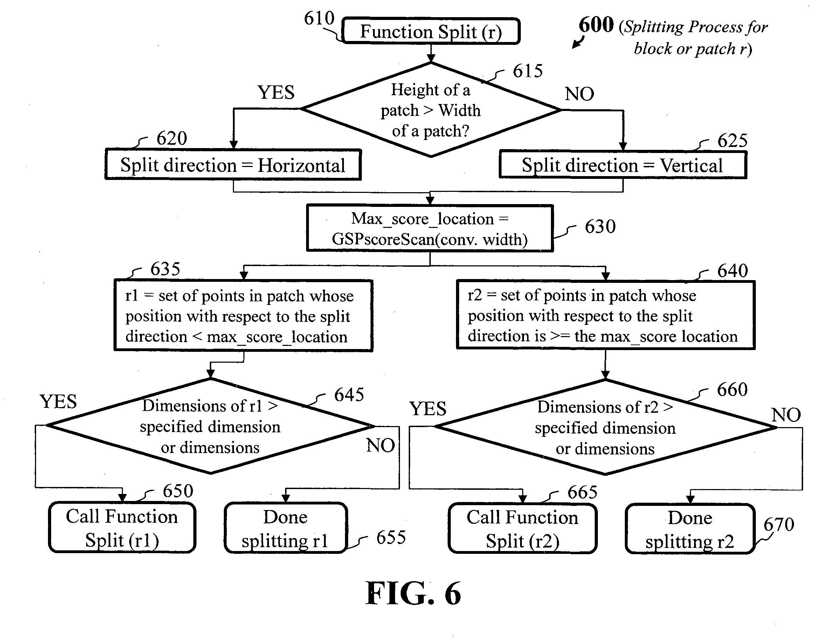

   FIG. 6 is a flow diagram illustrating a list of some steps for implementing a splitting process, according to embodiments of the present disclosure.
[Fig. 7]

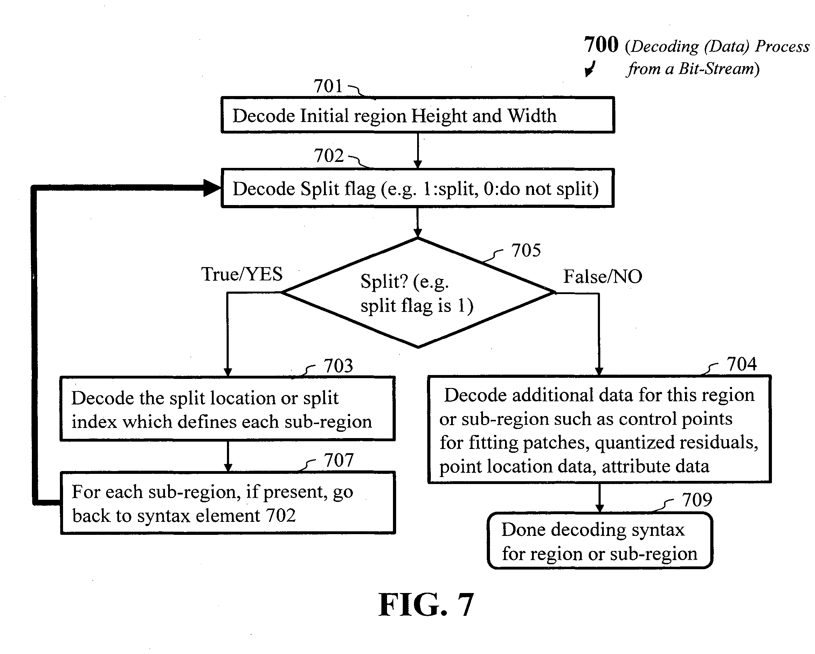

   FIG. 7 is a block diagram illustrating some steps for decoding data from a bit-stream, when data-dependent non-uniform splitting is used, according to embodiments of the present disclosure.
[Fig. 8A]

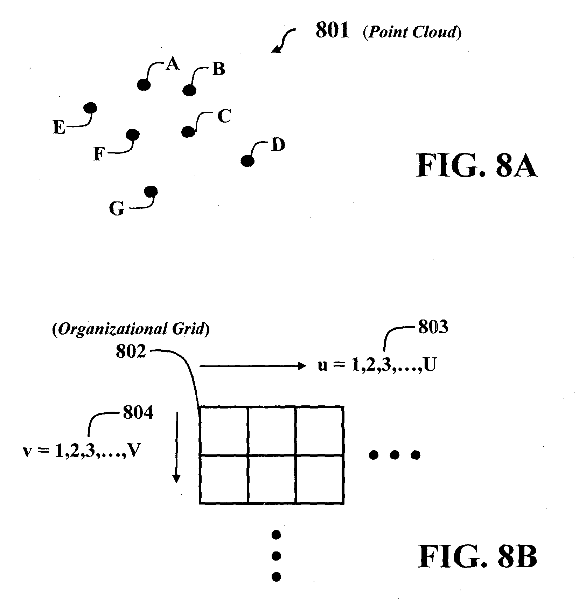

   FIG. 8A is a schematic illustrating a method for organizing an unorganized point cloud, according to embodiments of the present disclosure.
[Fig. 8B]
   FIG. 8B is a schematic illustrating an organizational grid or a matrix for example in 2D space, with each position in the grid having an index, according to embodiments of the present disclosure.
[Fig. 8C]

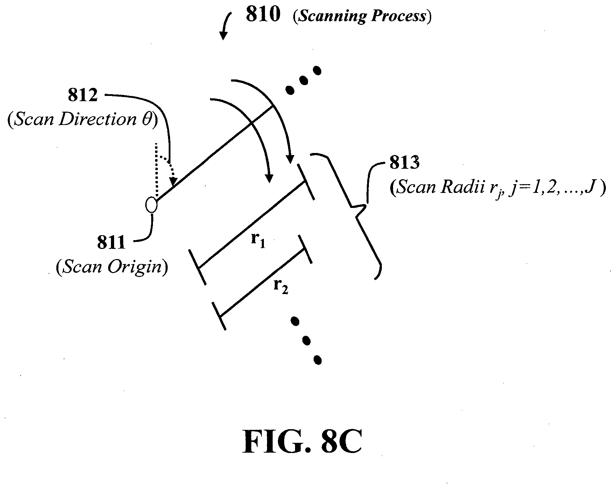

   FIG. 8C is a schematic illustrating a scanning process for a method for organizing an unorganized point cloud, according to embodiments of the present disclosure.
[Fig. 8D]

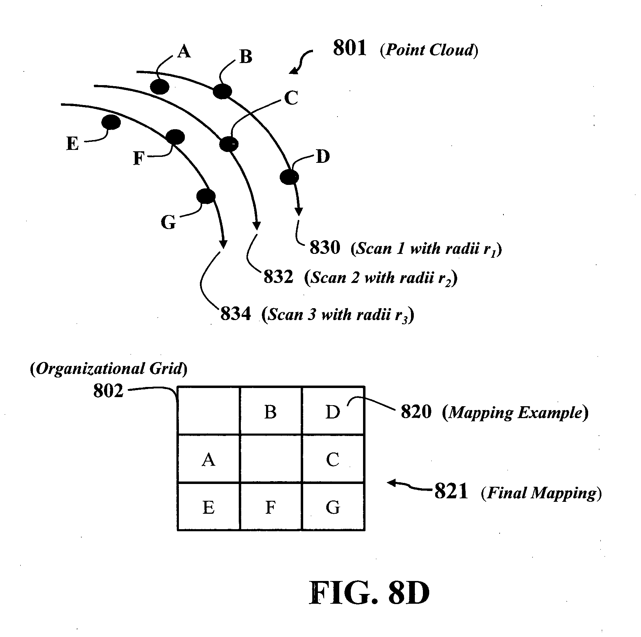

   FIG. 8D is a schematic illustrating a mapping process for a method for organizing an unorganized point cloud, according to embodiments of the present disclosure.

### [Description of Embodiments]

While the above-identified drawings set forth presently disclosed embodiments, other embodiments are also contemplated, as noted in the discussion. This disclosure presents illustrative embodiments by way of representation and not limitation.

### Predicting from center or predetermined location in block

FIG. 1A is a block diagram illustrating steps of a first point prediction method 100A, according to embodiments of the present disclosure. For example, instead of signaling a coordinate of each point relative to an origin or corner of a region, a component-wise difference between each point and a predetermined location in the block can be signaled. For instance, if the point position is (x,y,z) and the predetermined location in the block is defined as the center of the block (xc,yc,zc), then (x-xc,y-yc,z-zc) is signaled to the bit-stream.

Step 110 of FIG. 1A includes decoding a point cloud, using a processor connected to a memory, to decode each block in a set of blocks from a point cloud, so as to obtain a decoded point cloud, wherein each block includes a set of points

Step 115 of FIG. 1A includes decoding a set of prediction residuals from a compressed bitstream for each block by a processor.

Step 120 of FIG. 1A includes using a predetermined location in the block.

Step 125 of FIG. 1A includes computing for each prediction residual in the set of prediction residuals, a position of a point by adding the prediction residual to the predetermined location, so as to obtain a set of decoded points for the block, wherein the decoded points for the blocks in the set of blocks represent the decoded point cloud.

FIG. 1B is a block diagram 100B illustrating some components implementing the methods of the present disclosure, according to embodiments of the present disclosure. For example, a processor 12 can be for methods, encoder or decoders of the present disclosure, that is connected to a memory 10. The processor 12 can be connected to a network-enabled server 14, which is connected to a client device 16.

### Predicting a chain or sequence of points from previously-decoded points

According to the present disclosure another method can include a second point prediction method. The second method discloses that given a set of point locations (xn,yn,zn), n = 1,2,...,N, the point locations (xn,yn,zn) can be signaled to the bit-stream. If predicting from the center or predetermined location in the block, then for each point location (xn,yn,zn), a prediction residual (xn-xc,yn-yc,zn-zc) is signaled to the bit-stream. In some cases, such as when groups of points are clustered near each other, the prediction residual can be reduced by using previously-decoded points as predictors for a currently-decoded point. For example, the first point n=1 can be signaled as (xn,yn,zn) or (xn-xc,yn-yc,zn-zc). The second point n=2 can be signaled as (x2-x1, y2-y1, z2-z1). The third point can be signaled as (x3-x2,y3-y2,z3-z2), etc. for all n.

For example, the second method can be for decoding a point cloud, including using a processor connected to a memory, to decode each block in a set of blocks from a point cloud, so as to obtain a decoded point cloud. Wherein each block includes a set of points, such that for each block the processor is for decoding a set of prediction residuals from a compressed bitstream. Using a predetermined location in the block, and computing for each prediction residual in the set of prediction residuals, a position of a point by adding the prediction residual to the predetermined location, so as to obtain a set of decoded points for the block. Wherein the decoded points for the blocks in the set of blocks represent the decoded point cloud.

According to the present disclosure another method can include a third point prediction method. The third method discloses that the first decoded point (x1,y1,z1) can be used to predict subsequent points, so the prediction residual signaled for point n=2 is (x2-x1,y2-y1,z2-z1), and for point n=3 (x3-x1,y3-y1,z3-z1), and so on for all n.

For example, the third method includes a point cloud decoder including a memory having data stored including previously decoded points. A processor to decode a sequence of points from a compressed bitstream, so as to obtain a decoded point cloud The processor is to decode a sequence of prediction residuals from the compressed bitstream. Compute for each prediction residual in the sequence of prediction residuals, a position of a point by adding the prediction residual to a position of a previously decoded point stored in the memory, so as to obtain a sequence of decoded points. Wherein the sequence of decoded points represents the decoded point cloud.

### Reordering of points or sequence of points to reduce magnitude or energy in prediction residual

Given a sequence of points (xn,yn,zn), n=1,2,..,N in a block or region, the points can be reordered such that the distance between subsequent points is minimized. Doing so reduces the magnitude or energy of the prediction residuals signaled for the case when a chain or sequence of points is signaled.

### Reordering of points to increase frequency of occurrence of identical residuals

Given a sequence of points (xn,yn,zn), n=1,2,..,N in a block or region, the points can be reordered such that the number of different distances between subsequent points is minimized. For example, for one coordinate, if the sequence of differences between five successive points is 1,4,4,1, but if the points can be reordered such as the differences between the successive points becomes 3,3,3,3, then although the total of the differences after reordering is higher than the total before reordering, the number of different distances is reduced. When a coder such as an entropy coder is used to signal these differences or prediction residuals, the residuals generated after reordering points can therefore have a reduced entropy, thus decreasing the number of bits that would need to be signaled to the bit-stream.

### Skip encoding and/or decoding of a point if it is identical to or within a threshold distance from an already-decoded point

When encoding a set of points and signaling them to a bit-stream, if a given point is collocated or within a threshold distance from a previously-signaled point, then that point is not signaled to the bit-stream.

In another embodiment, if a given decoded point is collocated or within a threshold distance from a previously-signaled point, then that point is not reconstructed, i.e. it is not included in the reconstructed point cloud. The total number of reconstructed points in the decoded point cloud can therefore be reduced, thus reducing memory or storage requirements and improving rendering speeds due to the reduced number of points that would need to be rendered.

In another embodiment, if a given point is outside a bounding box or minimum and maximum coordinate limits, then it is not signaled to the bit-stream.

In another embodiment, if a given decoded point is outside a bounding box or minimum and maximum coordinate limits, then it is not included in the reconstructed point cloud.

### Data-dependent non-uniform partitioning

Referring to FIG. 2A, the data-dependent non-uniform partitioning 202 can be performed according to embodiments of this present disclosure. The data-dependent non-uniform partitioning 202 can be based upon measures or calculations based on the data representing the object, along with information about the current partitioning structure, such as a minimum or maximum block size, a function can specify how or where to split the current block or sub-block being processed. For example, in 202 of FIG. 2A, instead of splitting at the halfway positions and breaking the object among different blocks as shown in the prior art method 201 of FIG. 2B, the first split creates four sub-blocks or sub-partitions, but only one of them, the lower-right one, is occupied by object data (see FIG. 2A), according to the present disclosure. Similarly, FIG. 2A shows the second split partitions with the lower-right block into four sub-blocks without splitting the object data among different sub-blocks, according to the present disclosure.

If each point in 3D space is mapped or indexed to a position on a 2D grid, then this data-dependent non-uniform partitioning method can be applied to the 2D grid of indices.

FIG. 2B is a schematic illustrating a PRIOR ART partitioning method for partitioning a 3D space as in an octree. In particular, FIG. 2B shows the partitioning in 2D space, with a quadtree as shown in 201. The outside border in 201 denotes the initial block or partitioning of the space. The star is an example of an object represented by the data in the block. A decision process is used to decide whether to split the initial block into 2^N blocks or partitions, where N is the dimension of the space (N=2 for 2D space and N=3 for 3D space). Each partition is split in half vertically and horizontally into 2^N blocks. This splitting process repeats for each sub-block or sub-partition until a desired stopping criteria is met.

FIG. 3A is a schematic illustrating a process for using data alone a line to calculate where to perform the data-dependent non-uniform split, wherein given a block or patch 303, data along the vertical halfway split position 305 is scanned horizontally by a sliding window 307 of data points, which means splitting the current block horizontally, i.e. by a vertical line 311, e.g. into a left sub-block and a right sub-block for the case of partitioning a 2-D grid, according to embodiments of the present disclosure. The skip area 313 is on one side of the search area 307, used as input to a scoring function, where skip area 315 is on the other side of the search area 307, such that the width of the skip area 317 can be set to 1/3 the width of the patch of interest.

FIG. 3B is a schematic illustrating a process for using data along a line to calculate where to perform the data-dependent non-uniform split, such that given a block or patch 323, data along the horizontal split position 325 is scanned vertically by a sliding window 327 of data points, which means splitting the current block vertically, i.e. by a horizontal line 331, e.g. into a lower sub-block and an upper sub-block for the case of partitioning a 2-D grid according to embodiments of the present disclosure.

Referring to FIG. 3A and FIG. 3B, are schematics or diagrams of at least one process for using data alone a line to calculate where to perform the data-dependent non-uniform split. For example, FIG. 3A shows a block or patch 303, where data along the vertical halfway split position 305 is scanned horizontally by a sliding window 307 of data points. These data points can be data related to the position of the points in the point cloud, such as the distance or depth from a plane, or it can be related to attributes in the data, such as brightness or color. The sliding window contains M points, and data across the vertical half-way position is scanned horizontally (FIG. 3A), i.e. M points are selected and are used as input to a function such as a scoring function. To prevent blocks from becoming too thin, minimum border distance or skip area 315 and 313 can be defined, for example 317, in which the width of a skip area can be set to 1/3 the width of the patch, which ensures a minimum block size. The sliding window can slide one data point position at a time, or it can skip points, e.g. every other point, to simplify computation. For each window for which a score is computed, the best score, typically a maximum or minimum score, is located, and the position 309 corresponding to that best score is indicated as being the split position for splitting the current block horizontally, i.e. by a vertical line 311, e.g. into a left sub-block and a right sub-block for the case of partitioning a 2-D grid.

Referring to FIG. 3B, if it is desired to split the same block in the other direction, e.g. vertically, this process can be repeated in a direction orthogonal to the initial direction. This will result in a vertical split, i.e. a splitting by a horizontal line 331, into an upper block or blocks and lower block or blocks. The output of this process is the position of each split, for example the location 329 of the maximum score resulting from a scoring function, or an index that can be mapped to the position of each split, for example, the position of the split line 331 relative to a corner of the patch. If a 2D block is split both horizontally and vertically, then the block is partitioned into four sub-blocks. If only horizontal or only vertical partitioning is done, then the block is partitioned into two sub-blocks. To prevent blocks from becoming too thin, minimum border distance or skip area 333 and 335 can be defined, for example 337, in which the height of a skip area can be set to 1/3 the height of the patch, which ensures a minimum block size. The sliding window can slide one data point position at a time, or it can skip points, e.g. every other point, to simplify computation. For each window for which a score is computed, the best score, typically a maximum or minimum score, is located, and the position 329 corresponding to that best score is indicated as being the split position for splitting the current block horizontally, i.e. by a horizontal line 331, e.g. into a top sub-block and a bottom sub-block for the case of partitioning a 2-D grid.

FIG. 4A is a schematic illustrating a process for using multidimensional sliding window of data points to calculate where to perform the data-dependent non-uniform split on a block or patch 403, wherein the data is a region oriented along the horizontal split position 411, e.g. vertical rectangle 419, according to embodiments of the present disclosure.

FIG. 4B is a schematic illustrating a process for using multidimensional sliding window of data points to calculate where to perform the data-dependent non-uniform split on a block or patch 423, wherein the data is a region oriented along a vertical split position 431, e.g. a horizontal rectangle 439, according to embodiments of the present disclosure.

Referring to FIG. 4A and FIG. 4B, are diagrams of at least one process for using multidimensional data to calculate where to perform the data-dependent non-uniform split. Instead of using a one-dimensional sliding window of data as input to a scoring function as is illustrated in FIG. 3A and FIG. 3B, in FIG. 4A and FIG. 4B, data from a multidimensional region, for example, a 2D region 419 or 439, can be used as input.

Regarding FIG. 4A, to prevent blocks from becoming too thin, minimum border distance or skip area 415 and 413 can be defined, for example 417, in which the width of a skip area can be set to 1/3 the width of the patch, which ensures a minimum block size. The sliding window can slide one data point position at a time, or it can skip points, e.g. every other point, to simplify computation. For each window for which a score is computed, the best score, typically a maximum or minimum score, is located, and the position 409 corresponding to that best score is indicated as being the split position for splitting the current block horizontally, i.e. by a vertical line 411, e.g. into a left sub-block and a right sub-block for the case of partitioning a 2-D grid.

Regarding FIG. 4B, to also prevent blocks from becoming too thin, minimum border distance or skip area 433 and 435 can be defined, for example 437, in which the height of a skip area can be set to 1/3 the height of the patch, which ensures a minimum block size. The sliding window can slide one data point position at a time, or it can skip points, e.g. every other point, to simplify computation. For each window for which a score is computed, the best score, typically a maximum or minimum score, is located, and the position 429 corresponding to that best score is indicated as being the split position for splitting the current block horizontally, i.e. by a horizontal line 431, e.g. into a top sub-block and a bottom sub-block for the case of partitioning a 2-D grid.

FIG. 5A is a schematic illustrating a 3D point cloud 510, according to embodiments of the present disclosure.

FIG. 5B is a schematic illustrating a range map or depth map 520 which represents the distance of each point from a plane or the elevation or depth of each point is used as data input to the scoring function, according to embodiments of the present disclosure.

FIG. 5C is a schematic illustrating the output of a scoring function, for example a graph signal processing (GSP) score map 530, in which higher score values 531 are illustrated using lighter colors, according to embodiments of the present disclosure. This scoring function, for example, can assign higher score values to areas of the patch, grid, or point cloud that exhibit discontinuities, as can be the case along edges of objects represented in 2D or 3D space.

### Resampling

Still referring to FIG. 5C, regarding resampling (to reduce the number of points in the block), given a region or block containing P1 points, the scoring function 530 can be used to identify a subset of P2 points whose score is less than or greater than a threshold. Subsequent processing of the region, block or partition then continues using the P2 points instead of the P1 points. Computational complexity of the system or the amount of data that is signaled to the bit-stream can be reduced when P2 < P1.

FIG. 5D is a schematic illustrating a PRIOR ART uniform splitting method 540 having a number of patches at 52.

FIG. 5E and FIG. 5F are schematics illustrating a method of data-dependent non-uniform splitting 550 of FIG. 5E and 560 of FIG. 5F, according to embodiments of the present disclosure. Wherein, FIG. 5E shows the locations of non-uniform splitting when using sliding windows 307 of FIG. 3A and 327 of FIG. 3B along lines of data when calculating maximum score points 309 of FIG. 3A and 329 FIG. 3B, resulting in 31 patches. Wherein FIG. 5F shows the locations of non-uniform splitting when using sliding windows 407 of FIG. 4A and 427 FIG. 4B along regions or rectangles of data when calculating maximum score points 409 of FIG. 4A and 429 of FIG. 4A, resulting in 36 patches. Specifically, the data-dependent non-uniform splitting 550 of FIG. 5E and 560 of FIG. 5F, according to embodiments of the present disclosure show fewer patches, respectively, 31 patches for 550 of FIG. 5E, 36 patches for 560 of FIG. 5F, than that of the PRIOR ART method 540 of FIG. 5D, i.e. 52 patches.

Referring to FIG. 5B, the range map or depth map 520 represents the distance of each point from a plane or the elevation or depth of each point is used as data input to the scoring function. In the score map 530, the point locations corresponding to the point cloud 510 or indices corresponding to the point cloud 510, or corresponding to the range map 520, are highlighted or illustrated with a lighter color where the scoring function was best, e.g. maximum. In this case, a graph signal processing (GSP) method was used to compute the scores. The locations at where the best scores occur in this example tend to correspond to edges or discontinuities in the point cloud 510 or range map 520.

Referring to FIG. 5E and FIG. 5F, the optimal horizontal and vertical splitting locations 550 of FIG. 5E are shown when the methods of FIG. 3A and FIG. 3B are used. Also, the optimal horizontal and vertical splitting locations 560 of FIG. 5F are shown when the methods of FIG. 4A and FIG. 4B are used. The graph signal processing (GSP) method can be a fast resampling method. For example, when a particular graph filter is applied on the geometric information of each point in the point cloud, the filtering results or output 530 of FIG. 5C can serve as scores reflecting the importance of a point or set of points input to the filter, in terms of geometric properties. If any other attributes are of interest in the importance evaluation, the same graph filter can be applied on them, and the final filtering score could be a weighted sum of all the filtering results on geometric position and attributes associated with the points.

FIG. 6 is a flow diagram illustrating a list of some steps for implementing a splitting process 600, according to embodiments of the present disclosure. Some steps for implementing a splitting process, can include step 610 which illustrates a splitting function, i.e. *"Function Split (r)",* that has as input a block, partition or patch *r*, that has an initial dimension such as width and height.

Referring to steps 615, 620 and 625, step 615 of FIG. 6A, shows that if the height is greater than the width, that this can be expressed as, *"if Height of a patch > Width of a patch".* Then, step 620 illustrates the split direction can be set to horizontal if the height is greater than the width, otherwise, the split direction can be set to vertical, as shown in step 625, i.e. *"choose split direction- > Horizontal, else split direction-> Vertical".*

Step 630 of FIG. 6A, illustrates a scoring function is then computed, for example, a graph signal processing scoring function *GSPscoreScan(conv.width),* where *conv.width* indicates the size, or size and dimensions of the search area. Also, *conv.width* can include other information, such as the size of the skip area. The scoring function returns *max_score_location,* which is the location, e.g. a horizontal or vertical position or offset, of the location where the score is optimal, i.e. *"max_score_location = GSPscoreScan(conv. width)".* The block, partition or patch or region r can be split into two regions r1 (step 635) and r2 (step 640).

Step 635 of FIG. 6A, illustrates the block, partition or patch or region (r ) can be split into region 1 (r1), wherein r1 corresponds to where the position in the region is to one side of the split location, i.e. *r1 = set of points in patch whose position with respect to the split direction is less than ( < ) to the max_score_location.*

Step 640 of FIG. 6A, illustrates the block, partition or patch or region (r ) that can be split into region 2 (r2), wherein r2 corresponds to where the position is on the other side of the split location, i.e. *r2 = set of points in patch whose position with respect to the split direction is greater than or equal (>= ) to the max_score_location.*

Step 645 of FIG. 6A, illustrates that this splitting process can be repeated on the sub-partitions r1, for example, if the sub-partitions satisfy certain criteria, such as a minimum size or dimension, i.e. *dimensions of r1 > specified dimension or dimensions.*

Step 650 of FIG. 6A, shows that if the sub-partitions satisfy the criteria that r1 is greater than the specified dimension, then call *Function Split (r1),* i.e. *if the dimensions of r1 are greater (>) than a specified dimension or dimensions, then call Function Split (r1).*

Step 655 of FIG. 6A, shows that if the sub-partitions do not satisfy the criteria, then the r1 splitting process is done, i.e. *done splitting r1.*

Step 660 of FIG. 6A, illustrates that this splitting process can be repeated on the sub-partitions r2, for example, if the sub-partitions satisfy certain criteria, such as a minimum size or dimension, i.e. *dimensions of r2 > specified dimension or dimensions.*

Step 665 of FIG. 6A, shows that if the sub-partitions satisfy the criteria that r2 is greater than the specified dimension, then call *Function Split (r1),* i.e. *if the dimensions of r1 are greater (>) than a specified dimension or dimensions, then call Function Split (r1).*

Step 670 of FIG. 6A, shows that if the sub-partitions do not satisfy the criteria, then the r2 splitting process is done, i.e. *done splitting r2.*

FIG. 7 is a block diagram illustrating some steps for decoding data from a bit-stream, when data-dependent non-uniform splitting is used, according to embodiments of the present disclosure. For example, FIG. 7 lists the syntax for a bit-stream used for decoding data, when data-dependent non-uniform splitting is used. The initial patch, region, or block size is decoded 701, e.g. a height and width. A split flag for the region is decoded 702. The presence of a split is determined by determining 705 whether the split flag is true (yes) or false (no). For example, a flag value of 1 can indicate the presence of a split, and a flag value of 0 can indicate that no split is present. If the split flag is true (yes), e.g. 1, then the region will be split into sub-regions. If the split flag is false (no), e.g. 0, then the region will not be split further. If the split flag is 1, then the split location or split index which defines each sub-region is decoded 703. The split location can be an offset, absolute location or coordinate, an integer specifying an offset from a pre-specified position in the current region such as the corner of the region, a horizontal, vertical, or horizontal and vertical offset, or an index to a look-up table, which maps each index to a horizontal, vertical, or horizontal and vertical offset. The set of split flags can be considered as being a specification of a split tree, which defines the split hierarchical for the entire set of partitions or sub-partitions. If the split flag is false (no), e.g. 0, then the region is no longer split, and data associated with the region is decoded 704, then the method is done with decoding syntax for region or sub-region 709. This data can include control points for fitting patches, quantized prediction residuals, point location data, or attribute data. If the split flag is true (yes), e.g. 1, and thus sub-regions are defined, then for each sub-region output by 703, the syntax repeats for each sub-region starting from 702. It is not necessary to go back to 701 to specify a width and height, because the decoder can infer the width and height of each sub-region based upon the split locations.

Still referring to FIG. 7, noted is that the split index includes, but is not limited to:
(1) An integer specifying an offset from a pre-specified position in the current block or grid;
(2) A horizontal, vertical, or horizontal and vertical offset;
(3) An index to a look-up table, which maps each index to a horizontal, vertical, or horizontal and vertical offset.

### Aligning/resampling to a grid

Given a region, block or partition containing arbitrarily-located points, the points are resampled or aligned to a predetermined subset of locations. For example, if the coordinates of each point comprise floating point numbers between 0.0 and 1.0, the coordinates can be aligned, such as through a quantization or repositioning process, such that all coordinates are multiples of 0.1. In this example, the points would therefore be aligned to a grid of resolution 0.1. This aligning or resampling therefore reduces the number of possible coordinates for each point, which reduces the number of possible different values for coordinates that would need to be signaled to the bit-stream.

In another embodiment, the coordinates would not be signaled directly, but an index would be signaled. For example, if the coordinate of each point is greater than or equal 0.0 and is less than 1.0, and if a grid resolution is 0.5, then point coordinates in the region would be realigned to 0.0 or 0.5. In that case, a one-bit flag can be used to indicate whether a coordinate has been aligned to 0.0 or 0.5. If the grid resolution is 1.0, then nothing would need to be signaled to indicate the realigned point coordinates, as they would be co-aligned with the origin or corner of the region.

### Method to organize an unorganized point cloud

FIG. 8A is a schematic illustrating a method for organizing an unorganized point cloud, according to embodiments of the present disclosure.

FIG. 8B is a schematic illustrating an organizational grid or a matrix for example, in 2D space, with each position in the grid having an index, according to embodiments of the present disclosure;

FIG. 8C is a schematic illustrating a scanning process for a method for organizing an unorganized point cloud, according to embodiments of the present disclosure;

FIG. 8D is a schematic illustrating a mapping process for a method for organizing an unorganized point cloud, according to embodiments of the present disclosure;

For example, the point cloud 801 of FIG. 8A can have N arbitrarily-located points at coordinates (xn,yn,zn), n=1,2,..,N and is denoted as being an unorganized point cloud. In this example, each point is labeled with a letter, A through G. An organizational grid 802 of FIG. 8B is defined as a matrix or grid, for example, in 2D space, with each position in the grid having an index. For the 2D grid case, there is a horizontal index u 802 and vertical index v 803 of FIG. 8B. Each point in the point cloud 801 of FIG. 8A will be mapped, thus organized, to a position in the grid 802 of FIG. 8B. Therefore, each point in the point cloud can be indexed via (u,v). Subsequent partitioning of the (u,v) space 802 therefore partitions the point cloud 801 into subgroups of points where each element in a given partition of (u,v) space corresponds to a subset of points in the point cloud 801.

In one embodiment, the mapping of each point in the point cloud 701 to positions in the organizational grid 802 of FIG. 8B is predetermined or known before the point cloud is encoded.

In another embodiment, a process maps each point of the point cloud 801 of FIG. 8A to a position in the organizational grid 802 of FIG. 8B. This process can be a scanning process 810 of FIG. 8C. A position such as a fixed position in 3D space is designated as the scan origin 811 of FIG. 8C. The points in the point cloud 801 of FIG. 8A will be virtually scanned based on their position relative to the scan origin, in an order based upon a scan direction 812 of FIG. 8C. The scan direction can be specified for example by an angle θ relative to a fixed direction. There are J scans, with each scan having a radius or distance 813 of FIG. 8C from the scan origin rⱼ, j=1, 2,...,J. In the mapping example 820 of FIG. 8D, the point cloud is scanned 830, 832, 834 with radii r₁, r₂, r₃, respectively. In this case, the number J of radii correspond to the number of elements V 804 of FIG. 8B in the v-direction of the organizational grid. All points in the point cloud within a given threshold distance from the scan are associated with that scan and then are removed from future consideration for subsequent scans. The range of angles over with a scan operates is divided into U equal partitions where U is the number of elements 803 of FIG. 8B in the organizational grid in the u direction. Given a scan radius rⱼ, the scan 820 of FIG. 8D associated with that radius can be divided into U partitions. These partitions can be equally spaced with respect to the scan direction 820. For all points in the point cloud that have been associated with scan rⱼ, each of those points is assigned to an index position u on the organization grid corresponding to the partition of the scan. Larger values of U would correspond to either longer scans or scans having smaller partitions, e.g. finer resolution scans. In 820, points B and D are associated with the first scan, and are placed in the corresponding row v=1 of the organizational grid. Points A and C are associated with the second scan, and points E, F, and G are associated with the third scan. The final mapping 821 of FIG. 8D of each point in the point cloud to the organizational grid allows each point in the 3D point cloud to be indexed by a location (u,v) in the organizational grid. Empty positions in the organizational grid are not mapped to a point in the point cloud. By mapping in this way, points that are adjacent to each other in 3D space are likely to be adjacent to each other in the organizational grid. Selecting regions or groups of points in the organizational grid therefore are likely to select related groups of points in 3D space.

In another embodiment, U and V are sufficiently large so every point in the point cloud is mapped to a unique position on the organizational grid.

In another embodiment, more than one point can be mapped to the same position in the organizational grid. In this case, the set of points that are mapped to a given position in the organizational grid can be represented by a single point, such as the average of the point positions or some other function of the point positions.

In another embodiment, the organizational grid may be sparse, i.e. have many empty positions. In this case, the organizational grid can be resampled or down sampled to reduce the number of empty positions. One example method to achieve this is by shifting or compacting non-empty positions toward one edge of the organizational grid. Another method can reduce the number of rows or columns in the organizational grid by grouping points eliminated rows or columns into the corresponding row or column of non-removed rows or columns. The non-removed elements of the organizational grid that contain multiple points can be replaced with single points as described earlier.

## Claims

1. A point cloud encoder, comprising:
a processor (12) to encode a block of points from the point cloud (801), so as to obtain an encoded point cloud, wherein the point cloud (801) includes a set of blocks and each block includes a set of points, wherein the processor (12) is to use a predetermined location in the block, compute for each point, a difference between a position of the point to the predetermined location, so as to obtain a set of prediction residuals for the set of points in the block, and a transmitter to transmit the set of prediction residuals over a compressed bitstream,
wherein the point cloud 3D space is mapped or indexed to a position on a 2D grid, **characterized in that** the point could encoder further comprises:
perform data-dependent non-uniform partitioning on said 2-D grid of a region having a set of points, such that a location of the partitioning across at least one of the two dimensions comprising the 2-D grid is determined by a scoring function which calculates a score associated with the position and attribute of each of the points, to identify a split position for splitting the current block, which is a 2D grid, into two sub-blocks as the location of the partitioning, wherein the scoring function assigns higher values to areas of the point cloud that exhibit edges,
wherein an input to the scoring function is a subset of points along one of the two dimensions within a search area, and the location of the point that corresponds to where an output of the scoring function is maximized, corresponds to the split position in the one of the two dimensions, and the current block is split into the two sub-blocks by a splitting line passing through the splitting position and along the other dimension perpendicular to the one dimension of the two dimensions.

2. The point cloud encoder of claim 1, wherein the points in each block are processed according to the order in which the points were acquired by a sensor.

3. The point cloud encoder of claim 1, wherein the encoding of a point is skipped if the point is identical to, or within a predetermined threshold distance, from a previously encoded point.

4. The point cloud encoder according to claim 1, comprising:
a memory (10) having data stored including previously encoded points.

5. The point cloud encoder of claim 4, wherein the previously encoded point corresponds to a point in the sequence of points that is encoded immediately before the point in the sequence.

6. A method for encoding a point cloud, comprising:
using a processor (12) connected to a memory (10), to encode a block of points from the point cloud (801), so as to obtain an encoded point cloud, wherein the point cloud (801) includes a set of blocks and each block includes a set of points, the processor (12) is to use a predetermined location in the block, compute for each point, a difference between a position of the point to the predetermined location, so as to obtain a set of prediction residuals for the set of points in the block, and a transmitter to transmit the set of prediction residuals over a compressed bitstream,
wherein the point cloud 3D space is mapped or indexed to a position on a 2D grid, **characterized by**:
performing data-dependent non-uniform partitioning on a 2-D grid of a region having a set of points, such that a location of the partitioning across at least one of the two dimensions comprising the 2-D grid is determined by a scoring function, which calculates a score associated with the position and attribute of each of the points, to identify a split position for splitting the current block, which is a 2D grid, into two sub-blocks as the location of the partitioning, wherein the scoring function assigns higher values to areas of the point cloud that exhibit edges,
wherein an input to the scoring function is a subset of points along one of the two dimensions within a search area, and the location of the point that corresponds to where an output of the scoring function is maximized, corresponds to the split position in the one of the two dimensions, and the current block is split into the two sub-blocks by a splitting line passing through the splitting position and along the other dimension perpendicular to the one dimension of the two dimensions.

## Patentansprüche

1. Punktwolkenkodierer, umfassend:
einen Prozessor (12) zum Kodieren eines Blocks von Punkten aus der Punktwolke (801), um eine kodierte Punktwolke zu erhalten, wobei die Punktwolke (801) einen Satz von Blöcken aufweist und jeder Block einen Satz von Punkten aufweist, wobei der Prozessor (12) eine vorbestimmte Stelle in dem Block verwenden soll, zum Berechnen, für jeden Punkt, einer Differenz zwischen einer Position des Punktes und der vorbestimmten Stelle, um einen Satz von Vorhersageresten für den Satz von Punkten in dem Block zu erhalten, und eines Übertragers zum Übertragen des Satzes von Vorhersageresten über einen komprimierten Bitstrom,
wobei der Punktwolke-3D-Raum auf eine Position auf einem 2D-Gitter abgebildet oder indiziert wird, **dadurch gekennzeichnet, dass** der Punktwolkenkodierer ferner umfasst:
Durchführen einer datenabhängigen ungleichmäßigen Partitionierung auf dem 2D-Gitter eines Bereichs, der einen Satz von Punkten aufweist, so dass eine Stelle der Partitionierung über mindestens eine der zwei Dimensionen, die das 2D-Gitter umfassen, durch eine Bewertungsfunktion bestimmt wird, die eine mit der Position und dem Attribut jedes der Punkte verbundene Bewertung berechnet, um eine Teilungsposition zum Teilen des aktuellen Blocks, der ein 2D-Gitter ist, in zwei Unterblöcke als Stelle der Partitionierung zu identifizieren, wobei die Bewertungsfunktion Bereichen der Punktwolke, die Kanten vorweisen, höhere Werte zuweist,
wobei eine Eingabe für die Bewertungsfunktion eine Untergruppe von Punkten entlang einer der zwei Dimensionen innerhalb eines Suchbereichs ist, und die Stelle des Punktes, die dem Ort entspricht, an dem eine Ausgabe der Bewertungsfunktion maximiert wird, der Teilungsposition in der einen der zwei Dimensionen entspricht, und der aktuelle Block durch eine Teilungslinie, die durch die Teilungsposition und entlang der anderen Dimension senkrecht zu der einen Dimension der zwei Dimensionen verläuft, in die zwei Unterblöcke geteilt wird.

2. Punktwolkenkodierer nach Anspruch 1, wobei die Punkte in jedem Block gemäß der Reihenfolge verarbeitet werden, in der die Punkte von einem Sensor beschafft werden.

3. Punktwolkenkodierer nach Anspruch 1, wobei die Kodierung eines Punktes übersprungen wird, wenn der Punkt mit einem zuvor kodierten Punkt identisch ist oder innerhalb eines vorbestimmten Schwellenwertabstands zu diesem liegt.

4. Punktwolkenkodierer nach Anspruch 1, umfassend:
einen Speicher (10), in dem Daten gespeichert sind, die zuvor kodierte Punkte aufweisen.

5. Punktwolkenkodierer nach Anspruch 4, wobei der zuvor kodierte Punkt einem Punkt in der Punktesequenz entspricht, der unmittelbar vor dem Punkt in der Sequenz kodiert ist.

6. Verfahren zur Kodierung einer Punktwolke, umfassend:
Verwenden eines Prozessors (12), der mit einem Speicher (10) verbunden ist, zum Kodieren eines Blocks von Punkten aus der Punktwolke (801), um eine kodierte Punktwolke zu erhalten, wobei die Punktwolke (801) einen Satz von Blöcken aufweist und jeder Block einen Satz von Punkten aufweist, wobei der Prozessor (12) eine vorbestimmte Stelle in dem Block verwenden soll, zum Berechnen, für jeden Punkt, einer Differenz zwischen einer Position des Punktes und der vorbestimmten Stelle, um einen Satz von Vorhersageresten für den Satz von Punkten in dem Block zu erhalten, und eines Übertragers zum Übertragen des Satzes von Vorhersageresten über einen komprimierten Bitstrom,
wobei der Punktwolke-3D-Raum auf eine Position auf einem 2D-Gitter abgebildet oder indiziert wird, **gekennzeichnet durch**:
Durchführen einer datenabhängigen ungleichmäßigen Partitionierung auf einem 2D-Gitter eines Bereichs, der einen Satz von Punkten aufweist, so dass eine Stelle der Partitionierung über mindestens eine der zwei Dimensionen, die das 2D-Gitter umfassen, durch eine Bewertungsfunktion bestimmt wird, die eine mit der Position und dem Attribut jedes der Punkte verbundene Bewertung berechnet, um eine Teilungsposition zum Teilen des aktuellen Blocks, der ein 2D-Gitter ist, in zwei Unterblöcke als Stelle der Partitionierung zu identifizieren, wobei die Bewertungsfunktion Bereichen der Punktwolke, die Kanten vorweisen, höhere Werte zuweist,
wobei eine Eingabe für die Bewertungsfunktion eine Untergruppe von Punkten entlang einer der zwei Dimensionen innerhalb eines Suchbereichs ist, und die Stelle des Punktes, die dem Ort entspricht, an dem eine Ausgabe der Bewertungsfunktion maximiert wird, der Teilungsposition in der einen der zwei Dimensionen entspricht, und der aktuelle Block durch eine Teilungslinie, die durch die Teilungsposition und entlang der anderen Dimension senkrecht zu der einen Dimension der zwei Dimensionen verläuft, in die zwei Unterblöcke geteilt wird.

## Revendications

1. Codeur de nuage de points, comprenant :
un processeur (12) pour coder un bloc de points à partir du nuage de points (801), de manière à obtenir un nuage de points codé, dans lequel le nuage de points (801) inclut un ensemble de blocs et chaque bloc inclut un ensemble de points, dans lequel le processeur (12) doit utiliser un emplacement prédéterminé dans le bloc, calculer pour chaque point une différence entre une position du point et l'emplacement prédéterminé, de manière à obtenir un ensemble de résidus de prédiction pour l'ensemble de points dans le bloc, et un transmetteur pour transmettre l'ensemble de résidus de prédiction sur un flux binaire compressé,
dans lequel l'espace 3D de nuage de points est mis en correspondance ou indexé par rapport à une position sur une grille 2D, **caractérisé en ce que** le codeur de nuage de points comprend en outre l'étape consistant à :
effectuer un partitionnement non uniforme dépendant de données sur ladite grille 2D d'une région présentant un ensemble de points, de telle sorte qu'un emplacement du partitionnement à travers au moins l'une des deux dimensions comprenant la grille 2D est déterminé par une fonction de notation qui calcule un score associé à la position et à l'attribut de chacun des points, afin d'identifier une position de division pour diviser le bloc actuel, qui est une grille 2D, en deux sous-blocs en tant qu'emplacement du partitionnement, dans lequel la fonction de notation attribue des valeurs plus élevées à des zones du nuage de points qui présentent des bords,
dans lequel une entrée vers la fonction de notation est un sous-ensemble de points le long d'une certaine des deux dimensions à l'intérieur d'une zone de recherche, et l'emplacement du point, qui correspond à l'endroit où une sortie de la fonction de notation est maximisée, correspond à la position de division dans la certaine des deux dimensions, et le bloc actuel est divisé en les deux sous-blocs par une ligne de division passant par la position de division et le long de l'autre dimension perpendiculaire à la certaine dimension des deux dimensions.

2. Codeur de nuage de points selon la revendication 1, dans lequel les points dans chaque bloc sont traités selon l'ordre dans lequel les points ont été acquis par un capteur.

3. Codeur de nuage de points selon la revendication 1, dans lequel le codage d'un point est ignoré si le point est identique à ou à l'intérieur d'une distance de seuil prédéterminée, à partir d'un point précédemment codé.

4. Codeur de nuage de points selon la revendication 1, comprenant :
une mémoire (10) présentant des données stockées incluant des points précédemment codés.

5. Codeur de nuage de points selon la revendication 4, dans lequel le point précédemment codé correspond à un point dans la séquence de points qui est codé immédiatement avant le point dans la séquence.

6. Procédé de codage d'un nuage de points, comprenant les étapes consistant à :
utiliser un processeur (12) connecté à une mémoire (10) pour coder un bloc de points à partir du nuage de points (801), de manière à obtenir un nuage de points codé, dans lequel le nuage de points (801) inclut un ensemble de blocs et chaque bloc inclut un ensemble de points, le processeur (12) doit utiliser un emplacement prédéterminé dans le bloc, calculer pour chaque point une différence entre une position du point et l'emplacement prédéterminé, de manière à obtenir un ensemble de résidus de prédiction pour l'ensemble de points dans le bloc, et un transmetteur pour transmettre l'ensemble de résidus de prédiction sur un flux binaire compressé,
dans lequel l'espace 3D de nuage de points est mis en correspondance ou indexé par rapport à une position sur une grille 2D, **caractérisé par** l'étape consistant à :
effectuer un partitionnement non uniforme dépendant de données sur une grille 2D d'une région présentant un ensemble de points, de telle sorte qu'un emplacement du partitionnement à travers au moins l'une des deux dimensions comprenant la grille 2D est déterminé par une fonction de notation qui calcule un score associé à la position et à l'attribut de chacun des points, afin d'identifier une position de division pour diviser le bloc actuel, qui est une grille 2D, en deux sous-blocs en tant qu'emplacement du partitionnement, dans lequel la fonction de notation attribue des valeurs plus élevées à des zones du nuage de points qui présentent des bords,
dans lequel une entrée vers la fonction de notation est un sous-ensemble de points le long d'une certaine des deux dimensions à l'intérieur d'une zone de recherche, et l'emplacement du point, qui correspond à l'endroit où une sortie de la fonction de notation est maximisée, correspond à la position de division dans la certaine des deux dimensions, et le bloc actuel est divisé en les deux sous-blocs par une ligne de division passant par la position de division et le long de l'autre dimension perpendiculaire à la certaine dimension des deux dimensions.
